(19) Europäisches Patentamt
European Patent Office
Office européen des brevets

(11) **EP 4 645 764 A1**

(12) **EUROPEAN PATENT APPLICATION**
published in accordance with Art. 153(4) EPC

(43) Date of publication:
**05.11.2025 Bulletin 2025/45**

(21) Application number: **24749561.7**

(22) Date of filing: **22.01.2024**

(51) International Patent Classification (IPC):
*H04L 9/40* (2022.01)

(52) Cooperative Patent Classification (CPC):
**G06F 21/64; H04L 9/32; H04L 9/40**

(86) International application number:
**PCT/CN2024/073450**

(87) International publication number:
**WO 2024/160080 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.02.2023 CN 202310118067**

(71) Applicants:
• **CHINA MOBILE COMMUNICATION CO., LTD
RESEARCH INSTITUTE
Beijing 100053 (CN)**
• **CHINA MOBILE COMMUNICATIONS GROUP CO.,
LTD.
Beijing 100032 (CN)**

(72) Inventors:
• LIU, Fuwen
Beijing 100053 (CN)
• WANG, Ke
Beijing 100053 (CN)
• YANG, Bo
Beijing 100053 (CN)
• SU, Li
Beijing 100053 (CN)
• HE, Shen
Beijing 100053 (CN)

(74) Representative: **Murgitroyd & Company
165-169 Scotland Street
Glasgow G5 8PL (GB)**

(54) **BLOCKCHAIN GENERATION METHOD AND APPARATUS, NODE AND STORAGE MEDIUM**

(57) A blockchain generation method and apparatus, a node and a storage medium are provided. The method includes: generating a second blockchain based on a first blockchain and a first function, and the second blockchain is used to detect whether data on the first blockchain has been tampered with; wherein blocks in the first blockchain are in a one-to-one correspondence with the blocks in the second blockchain, and a block body of each block in the second blockchain other than a genesis block is generated by using the first function, and the first function is formed by using at least two different types of hash functions in a nesting manner.

```
┌─────────────────────────────────────────────────────────────┐
│ generating a second blockchain based on a first blockchain and a │ ─── 301
│                        first function                            │
└─────────────────────────────────────────────────────────────┘
                              │
                              ▼
┌─────────────────────────────────────────────────────────────┐
│ detecting, by using the second blockchain, whether data of a to- │ ─── 302
│ be-detected-block in the first blockchain has been tampered with │
└─────────────────────────────────────────────────────────────┘
```

FIG. 3

EP 4 645 764 A1

**Description**

**CROSS-REFERENCE TO RELATED APPLICATION**

This application is based on and claims a priority to the Chinese patent application No. 202310118067.4 filed on February 1, 2023, which is incorporated herein by reference in its entirety.

**TECHNICAL FIELD**

The present application relates to the field of blockchain, and in particular to a blockchain generation method and apparatus, a node and a storage medium.

**BACKGROUND**

Blockchain technology, also known as distributed ledger technology, is a technology that utilizes a cryptographic algorithm and a consensus algorithm to enable an untrusted participant to reach consensus on a transaction without relying on a centralized authority. Due to the traceability and transparency of the blockchain technology in the transaction, it can be widely applied in various scenarios, such as finance, manufacturing, and healthcare.

In a blockchain system of related art, the cryptographic algorithm is relied on to ensure the security of digital assets on the blockchain. However, the cryptographic algorithms used in the blockchain system may be cracked, thereby posing a risk of data tampering on the blockchain.

**SUMMARY**

To solve technical problems in related art, the embodiments of the present application provide a blockchain generation method and apparatus, a node and a storage medium.

The technical solutions of the embodiments of the present application are implemented as follows.

An embodiment of the present application provides a blockchain generation method, including:
generating a second blockchain based on a first blockchain and a first function, wherein the second blockchain is used to detect whether data on the first blockchain has been tampered with; blocks in the first blockchain are in a one-to-one correspondence with blocks in the second blockchain, and a block body of each block in the second blockchain other than a genesis block is generated by using the first function, and the first function is formed by using at least two different types of hash functions in a nesting manner.

In the above solution, a hash computation of the first function starts from an innermost hash function, and a computation result of each layer serves as an input to a hash function of an upper layer of the each layer, until the computation reaches an outermost hash function.

In the above solution, a block body of the genesis block in the second blockchain includes first information, and the first information indicates the first function.

In the above solution, when generating the second blockchain, the method further includes:
for each block in the second blockchain other than the genesis block, generating a block body of the block by inputting a block header of the block, a preceding block of the block, and a corresponding block in the first blockchain into the first function.

In the above solution, a block header of each block in the second blockchain includes second information, and the second information indicates a corresponding block in the first blockchain.

In the above solution, the second information includes a timestamp or a block number included in a block header of a corresponding block in the first blockchain.

In the above solution, the method further includes:
detecting, by using the second blockchain, whether data of a to-be-detected-block in the first blockchain has been tampered with.

In the above solution, the detecting, by using the second blockchain, whether the data of the to-be-detected-block in the first blockchain has been tampered with includes:
finding a corresponding to-be-detected-block in the first blockchain according to data to be verified; in the case that the to-be-detected-block is verified in the first blockchain, detecting, by using the second blockchain, whether the data of the to-be-detected-block has been tampered with.

In the above solution, the detecting, by using the second blockchain, whether the data of the to-be-detected-block has been tampered with includes:

finding the corresponding block and a preceding block of the corresponding block in the second blockchain by using a timestamp or a block number included in a block header of the to-be-detected-block;
detecting whether the data of the to-be-detected-block has been tampered with based on the corresponding block and the preceding block of the corresponding block that are found.

In the above solution, the detecting whether the data of the to-be-detected-block has been tampered with based on the corresponding block and the preceding block of the corresponding block that are found includes:

inputting the block header of the corresponding block of the to-be-detected-block in the second blockchain, the preceding block of the corresponding block, and the to-be-detected-block into the first function, to perform computation to obtain a computation result;
in the case that the block body of the corresponding block of the to-be-detected-block in the second blockchain is same as the computation result, determining that the data of the to-be-detected-block has not been tampered with.

In the above solution, the detecting whether the data of the to-be-detected-block has been tampered with based on the corresponding block and the preceding block of the corresponding block that are found includes:

inputting the block header of the corresponding block of the to-be-detected-block in the second blockchain, the preceding block of the corresponding block, and the to-be-detected-block into the first function, to perform computation to obtain a computation result;
in the case that the block body of the corresponding block of the to-be-detected-block in the second blockchain is different from the computation result, determining that the data of the to-be-detected-block has been tampered with.

The embodiments of the present application further provide a blockchain generation apparatus, including:
a first processing unit, configured to generate a second blockchain based on a first blockchain and a first function, wherein the second blockchain is used to detect whether data on the first blockchain has been tampered with; the blocks in the first blockchain are in a one-to-one correspondence with blocks in the second blockchain, a block body of each block in the second blockchain other than a genesis block is generated by using the first function, and the first function is formed by using at least two different types of hash functions in a nesting manner.

The embodiments of the present application further provide a node, including: a communication interface and a processor; wherein
the processor is configured to generate a second blockchain based on a first blockchain and a first function, wherein the second blockchain is used to detect whether data on the first blockchain has been tampered with; blocks in the first blockchain are in a one-to-one correspondence with blocks in the second blockchain, and a block body of each block in the second blockchain other than a genesis block is generated by using the first function, and the first function is formed by using at least two different types of hash functions in a nesting manner.

The embodiments of the present application further provide a node, including: a processor and a memory configured to store a computer program executable on the processor,
wherein the processor is configured to execute the computer program to implement the steps of any of the methods described above.

Embodiments of the present application further provide a storage medium storing a computer program, wherein the computer program is used to be executed by a processor to implement the steps of any of the methods described above.

According to the blockchain generation method and apparatus, the node and the storage medium provided in the embodiments of the present application, it generates a second blockchain based on a first blockchain and a first function, wherein the second blockchain is used to detect whether data on the first blockchain has been tampered with; blocks in the first blockchain are in a one-to-one correspondence with blocks in the second blockchain, and a block body of each block in the second blockchain other than a genesis block is generated by using the first function, and the first function is formed by using at least two different types of hash functions in a nesting manner. In the solutions provided by the embodiments of the present application, considering that the cryptographic algorithm used by the current blockchain (i.e., a first blockchain) may be cracked, and in order to protect the data integrity of the digital assets on the first blockchain, a verification blockchain (i.e., a second blockchain) corresponding to the first blockchain is generated to ensure that any modification to the data on the first blockchain can be detected. That is, a second blockchain for detecting whether the data on the first blockchain has been tampered with is generated based on the first blockchain and the first function. Since the first function is formed by using at least two different types of hash functions in a nesting manner, even if an attacker can crack any single hash function in the first function, the attacker cannot crack the entire first function as long as at least one of the hash functions in the first function has not been cracked. In this way, the second blockchain can be used to detect whether the data on the first blockchain has been tampered with, thereby further ensuring the data security in the first blockchain on the basis of the known cryptographic algorithm in the first blockchain.

**BRIEF DESCRIPTION OF THE DRAWINGS**

FIG. 1 is a schematic structural diagram of a blockchain of Bitcoin in related art;

FIG. 2 is a schematic flowchart of a blockchain transaction in related art;

FIG. 3 is a schematic flowchart of a blockchain generation method according to an embodiment of the present application;

FIG. 4 is a schematic diagram of an association structure between a first blockchain and a second blockchain in an embodiment of the present application;

FIG. 5 is a schematic structural diagram of a blockchain generation apparatus according to an embodiment of the present application;

FIG. 6 is a schematic structural diagram of a node according to an embodiment of the present application.

**DETAILED DESCRIPTION**

The present application will be further described in detail below in conjunction with the accompanying drawings and embodiments.

Before describing the embodiments of the present application, it should be noted that the term "blockchain" and the term "distributed ledger" have the same meaning and can be used interchangeably. Furthermore, the term "blockchain" and the term "Distributed Ledger Technology system (DLT system)" are equivalent in meaning and can be used interchangeably. In various embodiments of the present application, the term "blockchain" is used instead of "distributed ledger" or "Distributed Ledger Technology system".

Currently, blockchain systems can be divided into two categories based on how participants are granted access to the system: a permissionless blockchain system (such as Bitcoin, Ethereum, etc.) and a permissioned blockchain system (such as Hyperledger Fabric, etc.). In the permissionless blockchain system, anyone can access the system without authorization, and the participants do not trust each other. Each transaction (which can be represented as Tx) in a block of the permissionless blockchain may include the transaction content, a public key of a sender, an address of a recipient, and a signature of the transaction. In the permissioned blockchain system, only authorized participants can access the system, and the participants do not fully trust each other. Each transaction in a block of the permissioned blockchain may include a certificate of the sender, a transaction proposal, and a signature of the transaction.

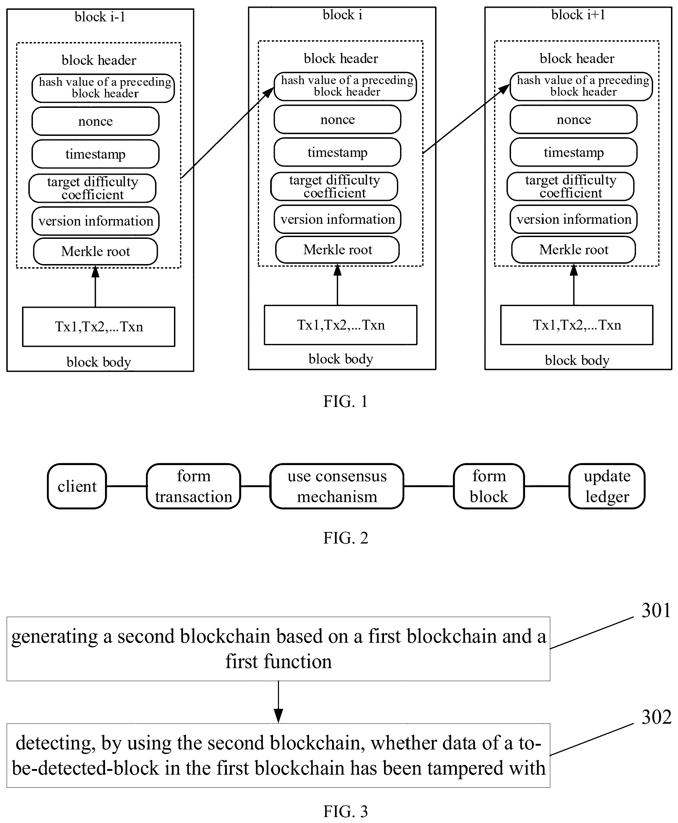

For both permissionless and permissioned blockchains, each block of the blockchain includes a block header and a block body; wherein a timestamp included in the block header (such as the timestamp included in the block header of Bitcoin and Ethereum) or a block number included in the block header (such as the block number included in the block header of Ethereum and Hyperledger Fabric) can be used to determine the uniqueness of the corresponding block on the blockchain, and can also be used to determine the order of the blocks. In addition, a first block of each blockchain is called a genesis block, which is hard-coded into an application. The link between the genesis block and a first subsequent block (hereinafter referred to as block 1) is established by including a header hash value of the genesis block (i.e. the hash value of the block header of the genesis block) in the header of block 1. The link between block 1 and the next block (hereinafter referred to as block 2) is established based on the same principle. In this way, all blocks are linked together through a hash computation. For example, for a blockchain structure of Bitcoin, as shown in FIG. 1, a block header may include a hash value of a preceding block header, an arbitrary or non-repetitive random value (nonce), a timestamp, a target difficulty coefficient, version information, and a Merkle root. The hash value of the preceding block header is obtained by performing a hash computation on the block header of the preceding block of the current block, and is used to connect the preceding block. The nonce, the timestamp, and the target difficulty coefficient are used in a Proof of Work (PoW) consensus mechanism to determine a node to generate the block. The version information is used to indicate the software version used to generate the block. The Merkle root is obtained by performing a hash computation on all transactions in the block body arranged in the Merkle, and it can effectively summarize all transactions in the block body.

The structures of other types of blockchains (such as Ethereum, Hyperledger Fabric, etc.) are similar to the Bitcoin blockchain structure shown in FIG. 1. However, since different types of blockchains may use different consensus algorithms, the parameters included in the block headers of different types of blockchains are also different. For example, Bitcoin and Ethereum both use mining-based consensus algorithms, so their block headers each includes a nonce, a timestamp, and a target difficulty coefficient. For another example, Hyperledger Fabric uses a Raft consensus algorithm and does not require a mining consensus algorithm, so its block header does not include the nonce, the timestamp, and the target difficulty coefficient.

The blockchain system includes a client and a network node. Except for a difference in system access, the permissionless blockchain system and the permissioned blockchain system have roughly the same transaction process, which is shown in FIG. 2. In a transaction process of the blockchain system, a cryptographic algorithm is used at multiple stages of the transaction process to ensure data security. For example, a digital signature algorithm can be used in a transaction generation phase to ensure that the transaction is initiated by a digital asset holder, and the digital signature algorithm can also be used in a consensus mechanism phase to ensure that exchanged messages have not been tampered with. Additionally, a hash function can be used for mining in the consensus mechanism phase to determine an accounting node, and the hash function can be used in the block formation phase to ensure the integrity of the transaction, and the hash function can be used in a ledger update phase to maintain a link between blocks.

From the above description, it can be seen that currently, a fixed cryptographic algorithm, such as a fixed digital signature algorithm, an encryption algorithm (for information encryption), the hash function, and the like, is used in the blockchain system. In other words, once the cryptographic algorithms to be used in the blockchain system are determined, these algorithms cannot be changed in the blockchain system, and a user is not able to choose which algorithms to use. In other words, in the blockchain system, cryptographic algorithms are relied on to ensure the security of digital assets on the blockchain.

However, the cryptographic algorithm used in the blockchain system may not be able to resist quantum computing attacks. Specifically, since a Shor quantum algorithm can crack the digital signature algorithm, a commonly used digital signature algorithm cannot resist quantum computing attacks; since a Grover quantum algorithm can accelerate the search for a key, a commonly used symmetric encryption algorithm needs to double the key length to have a chance of resisting quantum computing attacks; and since the operation speed of the quantum algorithm for finding hash collisions is faster than the operation speed of the known algorithm for finding hash collisions, the commonly used hash function can resist quantum computing attacks. However, mathematical discoveries and breakthroughs may reduce the difficulty of finding hash collisions. For example, the cracking of a Secure Hash Algorithm-1 (SHA-1) can reduce the difficulty of finding hash collisions from 280 operations to 269 operations. Therefore, in a quantum era, the commonly used hash function may also be at risk of being cracked.

From the above description, it can be seen that in the quantum era, the currently commonly used cryptographic algorithms are no longer secure, and there may be situations where the attacker tampers with the data on the blockchain without being detected. Considering that it will take a relatively long time for transition from a known blockchain to a quantum-secure blockchain; if there is a breakthrough in the cracking of cryptographic algorithms during this period, the data on the known blockchain may lose protection and suffer losses. Furthermore, considering that blockchain technology has been widely adopted across various industries, the data on the known blockchain is of valuable digital assets. Even in the quantum era, these digital assets may continue to be used, that is, transactions on a quantum blockchain may require the data from the known blockchain. Therefore, for the known blockchain, in order to ensure data security, measures need to be taken to detect whether the data on the blockchain has been tampered with before it transits to the quantum-secure blockchain.

Based on this, in various embodiments of the present application, considering that the cryptographic algorithm used by the current blockchain (hereinafter referred to as a first blockchain) may be cracked, and in order to protect the data integrity of the digital assets on the first blockchain, a verification blockchain corresponding to the first blockchain (hereinafter referred to as a second blockchain) is generated to ensure that any modification to the data on the first blockchain can be detected. Specifically, a second blockchain for detecting whether the data on the first blockchain has been tampered with is generated based on the first blockchain and the first function. Since the first function is formed by using at least two different types of hash functions in a nesting manner, even if an attacker can crack any single hash function in the first function, the attacker cannot crack the entire first function as long as at least one of the hash functions in the first function has not been cracked. In this way, the second blockchain can be used to detect whether the data on the first blockchain has been tampered with, thereby further ensuring the data security in the first blockchain on the basis of the known cryptographic algorithm in the first blockchain. In addition, in some specific scenarios (such as transactions on the quantum blockchain requiring data from the first blockchain), the data on the first blockchain can be used in the case that it is determined that the data on the first blockchain has not been tampered with, thereby ensuring the secure use of digital assets on the first blockchain.

An embodiment of the present application provides a blockchain generation method, which is applied to a node. As shown in FIG. 3, the method includes:

step 301: generating a second blockchain based on a first blockchain and a first function, wherein the second blockchain is used to detect whether data on the first blockchain has been tampered with; blocks in the first blockchain are in a one-to-one correspondence with blocks in the second blockchain, and a block body of each block in the second blockchain other than a genesis block is generated by using the first function, and the first function is formed by using at least two different types of hash functions in a nesting manner.

In practical application, the blockchain generation method provided in the embodiments of the present application can be applied to a network node in a blockchain system, such as the accounting node. For example, in the case that a first blockchain and a second blockchain are in a same blockchain system, the node may specifically include a network node of the blockchain system where the first blockchain and the second blockchain are located; in the case that the first blockchain and the second blockchain are in different blockchain systems, the node may specifically include a network node of the blockchain system where the second blockchain is located. In addition, in the case that the first blockchain and the second blockchain are in different blockchain systems, a data verification operation may need to be performed across blockchain systems, which is not limited in the embodiments of the present application.

In practical application, the first blockchain may be understood as a known blockchain, and the type of the first blockchain may be configured as needed, such as Bitcoin, Ethereum or Hyperledger Fabric, etc. In addition, the first blockchain may include at least one block, and correspondingly, the second blockchain may also include at least one block.

In practical application, the second blockchain may also be referred to as a Verification Blockchain (VBC), etc., and the block included in the second blockchain may also be referred to as Verification Block (VB), etc. In the embodiments of the present application, it does not limit the name of the second blockchain and the name of the blocks included in the second blockchain, as long as their functions are achieved.

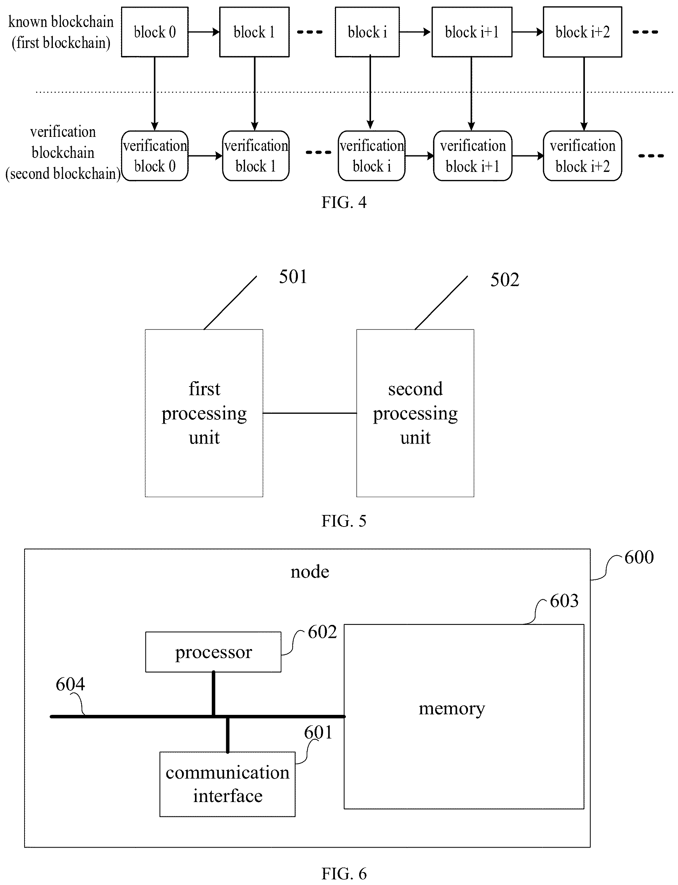

In practical application, the one-to-one correspondence between the blocks in the first blockchain and the blocks in the second blockchain is shown in FIG. 4. This correspondence can be understood as each block in the second blockchain is generated based on at least the corresponding block in the first blockchain, or it can be understood as each block in the second blockchain is used to detect whether the data on the corresponding block in the first blockchain has been tampered with.

In practical application, each block in the second blockchain may include a block header and a block body. In order to associate each block in the second blockchain with a corresponding block in the first blockchain, the block header of each block in the second blockchain may include second information, and the second information indicates the corresponding block in the first blockchain.

In practical application, the second information may include the timestamp or block number included in the block header of the corresponding block in the first blockchain. In this way, for any block in the first blockchain, the corresponding block of the block in the second blockchain can be found according to the timestamp or block number included in the block header; accordingly, for any block in the second blockchain, the corresponding block of the block in the first blockchain can be found according to the second information included in the block header. For example, in the case that the type of the first blockchain is Bitcoin, the second information may include the timestamp included in the block header of the corresponding block in the first blockchain; in the case that the type of the first blockchain is Hyperledger Fabric, the second information may include the block number included in the block header of the corresponding block in the first blockchain.

In practical application, the first function may also be referred to as a Nested Hash Function (NHF) or the like. In the embodiments of the present application does not limit the name of the first function as long as its function is achieved.

In practical application, the block body of the genesis block in the second blockchain may include first information, and the first information indicates a first function. The first information may be understood as a description of the first function, that is, an explanation of which different types of hash functions are used to form the first function in a nesting manner. In other words, the first information may indicate at least two different types of hash functions. In addition, it can be understood that the hash computation of the first function starts from an innermost hash function, and the computation result of each layer serves as an input to the hash function of an upper layer of the each layer, until the computation reaches an outermost hash function. For example, the first information may include the following formula to indicate that the first function uses hash functions H1, H2... Hn for nesting:

$$NHF = H1(H2(\ldots Hn(M)))\ (1)$$

where NHF represents the first function; H1, H2...Hn represent different types of hash functions, and n is an integer greater than or equal to 2; M represents the input data of the first function; the hash computation on M starts from the innermost hash function, that is, Hn(M) is calculated first, and the obtained computation result serves as an input to the upper layer hash function for computation, until the computation reaches an outermost hash function H1.

In practical application, the specific implementation of the first function (i.e., the specific nesting manner of the at least two different types of hash functions) may be configured according to requirements, such as NHF = SHA-256 (SHA-3 (M)), etc., and the embodiments of the present application are not limited thereto.

In practical application, the block body of each regular block (i.e., each block other than a genesis block) in the second blockchain may specifically be obtained by using the first function to perform a hash computation on the block header, the preceding block, and the corresponding block in the first blockchain.

Based on the above, in an embodiment, when generating the second blockchain, the method may further include: for each block in the second blockchain other than the genesis block, generating a block body of the block by inputting a block header of the block, a preceding block of the block, and a corresponding block in the first blockchain into the first function.

Since the block body of each block in the second blockchain, other than the genesis block, is generated based on the preceding block, in other words, since the input data of the first function includes the preceding block, the link between the current block and the preceding block can be achieved when generating the second blockchain. This chained data structure further increases the difficulty of cracking for the attacker, thereby further ensuring the data security in the first blockchain.

Specifically, in practical application, in the process of generating the second blockchain, the genesis block may be generated first, followed by the generation of a regular block (i.e., the block other than the genesis block). Since the block header of the genesis block in the second blockchain may include the timestamp or block number in the block header of the genesis block in the first blockchain, when generating the genesis block in the second blockchain, the block header may be generated first according to the following formula, and then the block body including the first information may be generated:

$$VB0.header = CB0.header.（TS/BN）\qquad（2）$$

where VB0 represents the genesis block in the second blockchain, CB0 represents the genesis block in the first blockchain; header represents the block header; TS represents the timestamp; BN represents the block number.

In practical application, after generating the genesis block in the second blockchain, the regular block (i.e., the block other than the genesis block) in the second blockchain can be generated in sequence according to the order of regular blocks included in the first blockchain. Since the block header of the regular block VBi (i is an integer greater than or equal to 1) in the second blockchain includes the timestamp or block number in the block header of regular block CBi in the first blockchain, when generating each regular block in the second blockchain, the block header can first be generated by using formula (3), and then the block body can be generated by using formula (4):

$$VBi.header = CBi.header.（TS/BN）\qquad（3）$$

$$VBi.body = NHF（VBi.header，VBi\text{-}1，CBi）\qquad（4）$$

where VBi represents a regular block in the second blockchain, CBi represents a regular block in the first blockchain, i is an integer greater than or equal to 1; body represents a block body; NHF() represents the first function; VBi-1 represents the preceding block of the VBi in the second blockchain. It can be understood that the block body of the regular block in the second blockchain is the computation result of the first function, and the input data of the first function includes the block header of the regular block (i.e., VBi.header), the preceding block of the regular block (i.e., VBi-1), and the regular block corresponding to the regular block in the first blockchain (i.e., CBi).

In practical application, after generating the second blockchain, the second blockchain can be used to detect whether the data on the first blockchain has been tampered with.

Based on the above, in an embodiment, as shown in FIG. 3, the method may further include:

step 302: detecting, by using the second blockchain, whether data of a to-be-detected-block in the first blockchain has been tampered with.

In practical application, during the transition from the known blockchain (i.e., the first blockchain) to the quantum blockchain, and in order to confirm that the data on the first blockchain has not been tampered with, the data on both the first blockchain and the second blockchain can be verified. Specifically, according to the data to be verified (which may be configured according to the verification requirements, such as transaction data, historical transaction-related data, etc.), the corresponding to-be-detected-block can be found in the first blockchain. A block verification mechanism in the first blockchain (such as a designated hash function, etc.) is first used to verify the to-be-detected-block. In the case that the to-be-detected-block is verified in the first blockchain, the second blockchain is used to detect whether the data of the to-be-detected-block has been tampered with.

Based on this, in an embodiment, the detecting, by using the second blockchain, whether the data of the to-be-detected-block in the first blockchain has been tampered with includes:

finding a corresponding to-be-detected-block in the first blockchain according to data to be verified; in the case that the to-be-detected-block is verified in the first blockchain, detecting, by using the second blockchain, whether the data of the to-be-detected-block has been tampered with.

In an embodiment, the detecting, by using the second blockchain, whether the data of the to-be-detected-block has been tampered with includes:

finding the corresponding block and a preceding block of the corresponding block in the second blockchain by using timestamp or a block number included in a block header of the to-be-detected-block;
detecting whether the data of the to-be-detected-block has been tampered with based on the corresponding block and the preceding block of the corresponding block that are found.

Specifically, in practical application, after finding the corresponding block (i.e., VBi) and the preceding block of the corresponding block (i.e., VBi-1) in the second blockchain through the timestamp or the block number included in the block header of the to-be-detected-block, the first function can be used to perform a hash computation on the block header of the corresponding block (i.e., VBi.header), the preceding block of the corresponding block (i.e., VBi-1), and the to-be-detected-block (i.e., CBi) to determine whether the computation result is equal to the block body of the corresponding block (i.e., VBi.body), that is, to perform the following formula:

$$VBi.body \stackrel{\smile}{=} NHF(VBi.header, VBi-1, CBi) \qquad (5)$$

where $\stackrel{\smile}{=}$ represents a comparison operation.

In practical application, when the computation result of the first function is equal to the block body of the corresponding block, it can be determined that the data on the to-be-detected-block has not been tampered with.

Based on this, in an embodiment, detecting whether the data of the to-be-detected-block has been tampered with based on the corresponding block and the preceding block of the corresponding block that are found includes:

inputting the block header of the corresponding block of the to-be-detected-block in the second blockchain, the preceding block of the corresponding block, and the to-be-detected-block into the first function, to perform computation to obtain a computation result;
in the case that the block body of the corresponding block of the to-be-detected-block in the second blockchain is same as the computation result, determining that the data of the to-be-detected-block has not been tampered with.

In practical application, when the computation result of the first function is not equal to the block body of the corresponding block, it can be determined that the data on the to-be-detected-block has been tampered with.

Based on this, in an embodiment, the detecting whether the data of the to-be-detected-block has been tampered with based on the corresponding block and the preceding block of the corresponding block that are found includes:

inputting the block header of the corresponding block of the to-be-detected-block in the second blockchain, the preceding block of the corresponding block, and the to-be-detected-block into the first function, to perform computation to obtain a computation result;
in the case that the block body of the corresponding block of the to-be-detected-block in the second blockchain is different from the computation result, determining that the data of the to-be-detected-block has been tampered with.

According to the blockchain generation method provided in the embodiments of the present application, it generates a second blockchain based on a first blockchain and a first function, wherein the second blockchain is used to detect whether data on the first blockchain has been tampered with; blocks in the first blockchain are in a one-to-one correspondence with blocks in the second blockchain, and a block body of each block in the second blockchain other than a genesis block is generated by using the first function, and the first function is formed by using at least two different types of hash functions in a nesting manner. In the solution provided by the embodiments of the present application, considering that the cryptographic algorithm used by the current blockchain (i.e., a first blockchain) may be cracked, and in order to protect the data integrity of the digital assets on the first blockchain, a verification blockchain corresponding to the first blockchain (i.e., a second blockchain) is generated to ensure that any modification to the data on the first blockchain can be detected. That is, based on the first blockchain and the first function, a second blockchain for detecting whether the data on the first blockchain has been tampered with is generated. Since the first function is formed by using at least two different types of hash functions in a nesting manner, even if an attacker can crack any single hash function in the first function, the attacker cannot crack the entire first function as long as at least one of the hash functions in the first function has not been cracked. In this way, the second blockchain can be used to detect whether the data on the first blockchain has been tampered with, thereby further ensuring the data security in the first blockchain on the basis of the known cryptographic algorithm in the first blockchain. In addition, in some specific scenarios (such as transactions on the quantum blockchain requiring data from the first blockchain), the data on the first blockchain can be used in the case that it is determined that the data on the first blockchain has not been tampered with, thereby ensuring the secure use of digital assets on the first blockchain.

To implement the method in the embodiments of the present application, the embodiments of the present application further provide a blockchain generation apparatus, which is configured on a node. As shown in FIG. 5, and the apparatus includes:

a first processing unit 501, configured to generate a second blockchain based on a first blockchain and a first function, wherein the second blockchain is used to detect whether data on the first blockchain has been tampered with; the blocks in the first blockchain are in a one-to-one correspondence with blocks in the second blockchain, a block body of each block in the second blockchain other than a genesis block is generated by using the first function, and the first function is formed by using at least two different types of hash functions in a nesting manner.

In an embodiment, when generating the second blockchain, the first processing unit 501 is further configured to, for each block in the second blockchain other than the genesis block, generate a block body of the block by inputting a block header of the block, a preceding block of the block, and a corresponding block in the first blockchain into the first function.

In an embodiment, as shown in FIG. 5, the device may further include:

a second processing unit 502, configured to use the second blockchain to detect whether the data of the to-be-detected-block in the first blockchain has been tampered with.

In an embodiment, the second processing unit 502 is further configured to find a corresponding to-be-detected-block in the first blockchain according to data to be verified; in the case that the to-be-detected-block is verified in the first blockchain, detect, by using the second blockchain, whether the data of the to-be-detected-block has been tampered with.

In an embodiment, the second processing unit 502 is further configured to:

find the corresponding block and a preceding block of the corresponding block in the second blockchain by using timestamp or a block number included in a block header of the to-be-detected-block;

detect whether the data of the to-be-detected-block has been tampered with based on the corresponding block and the preceding block of the corresponding block that are found.

In an embodiment, the second processing unit 502 is further configured to:

input the block header of the corresponding block of the to-be-detected-block in the second blockchain, the preceding block of the corresponding block, and the to-be-detected-block into the first function, to perform computation to obtain a computation result;

in the case that the block body of the corresponding block of the to-be-detected-block in the second blockchain is same as the computation result, determine that the data of the to-be-detected-block has not been tampered with.

In an embodiment, the second processing unit 502 is further configured to:

input the block header of the corresponding block of the to-be-detected-block in the second blockchain, the preceding block of the corresponding block, and the to-be-detected-block into the first function, to perform computation to obtain a computation result;

in the case that the block body of the corresponding block of the to-be-detected-block in the second blockchain is different from the computation result, determine that the data of the to-be-detected-block has been tampered with.

In practical application, the first processing unit 501 and the second processing unit 502 can be implemented by a processor in a blockchain generation apparatus.

It should be noted that, in the blockchain generation apparatus provided in the above embodiments, it only uses the division of the above program modules as an example during a process of blockchain generation. In practical application, the above processing can be assigned to different program modules as needed, that is, an internal structure of the apparatus is divided into different program modules to complete all or part of the processing described above. In addition, the blockchain generation apparatus provided in the above embodiments and the embodiments of the blockchain generation method belong to a same concept, and the specific implementation process is detailed in the method embodiment, which will not be repeated here.

Based on the hardware implementation of the above program modules, and in order to implement the methods of the embodiments of the present application, the embodiments of the present application further provides a node. As shown in FIG. 6, a node 600 includes:

a communication interface 601, configured to exchange information with other nodes and/or clients in the blockchain system;

a processor 602, connected to the communication interface 601 to facilitate information interaction with other nodes and/or clients in the blockchain system; the processor 602 is configured to execute the methods provided by one or more of the above technical solutions when running a computer program;

a memory 603, on which the computer program is stored.

Specifically, the processor 602 is configured to generate a second blockchain based on a first blockchain and a first function, wherein the second blockchain is used to detect whether data on the first blockchain has been tampered with; blocks in the first blockchain are in a one-to-one correspondence with blocks in the second blockchain, and a block body of each block in the second blockchain other than a genesis block is generated by using the first function, and the first function is formed by using at least two different types of hash functions in a nesting manner.

In an embodiment, when generating the second blockchain, the processor 602 is further configured to, for each block in the second blockchain other than the genesis block, generate a block body of the block by inputting a block header of the block, a preceding block of the block, and a corresponding block in the first blockchain into the first function.

In an embodiment, the processor 602 is further configured to detect, by using the second blockchain, whether the data of the to-be-detected-block in the first blockchain has been tampered with.

In an embodiment, the processor 602 is further configured to find a corresponding to-be-detected-block in the first blockchain according to data to be verified; in the case that the to-be-detected-block is verified in the first blockchain, detect, by using the second blockchain, whether the data of the to-be-detected-block has been tampered with.

In an embodiment, the processor 602 is further configured to:

find the corresponding block and a preceding block of the corresponding block in the second blockchain by using timestamp or a block number included in a block header of the to-be-detected-block;
detect whether the data of the to-be-detected-block has been tampered with based on the corresponding block and the preceding block of the corresponding block that are found.

In an embodiment, the processor 602 is further configured to:

input the block header of the corresponding block of the to-be-detected-block in the second blockchain, the preceding block of the corresponding block, and the to-be-detected-block into the first function, to perform computation to obtain a computation result;
in the case that the block body of the corresponding block of the to-be-detected-block in the second blockchain is same as the computation result, determine that the data of the to-be-detected-block has not been tampered with.

In an embodiment, the processor 602 is further configured to:

input the block header of the corresponding block of the to-be-detected-block in the second blockchain, the preceding block of the corresponding block, and the to-be-detected-block into the first function, to perform computation to obtain a computation result;
in the case that the block body of the corresponding block of the to-be-detected-block in the second blockchain is different from the computation result, determine that the data of the to-be-detected-block has been tampered with.

It should be noted that the specific processing process of the processor 602 can be understood by referring to the above method, which will not be repeated here.

Obviously, in practical application, the various components in the node 600 are coupled together through a bus system 604. It can be understood that the bus system 604 is configured to enable the connection and communication between these components. In addition to a data bus, the bus system 604 also includes a power bus, a control bus and a status signal bus. However, for the sake of clarity, all buses are marked as bus system 604 in FIG. 6.

The memory 603 in the embodiments of the present application is configured to store various types of data to support the operation of the node 600. Examples of such data include: any computer program used to operate on the node 600.

The methods disclosed in the above embodiments of the present application can be applied to, or implemented by, the processor 602. The processor 602 may be an integrated circuit chip with signal processing capabilities. In the implementation process, each step of the above method can be executed by integrated logic circuits in hardware within the processor 602 or by instructions in the form of software. The above processor 602 may be a general-purpose processor, a Digital Signal Processor (DSP), or other programmable logic devices, discrete gates or transistor logic devices, discrete hardware components, etc. The processor 602 can implement or execute the various methods, steps and logic block diagrams disclosed in the embodiments of the present application. The general-purpose processor may be a microprocessor or any conventional processor, etc. The steps of the methods disclosed in the embodiments of the present application can be directly executed by the hardware decoding processor, or by a combination of hardware and software modules in the decoding processor. The software module may be stored in a storage medium, which is located in the memory 603. The processor 602 reads the information from the memory 603 and, in combination with its hardware, performs the steps of the above methods.

In an exemplary embodiment, the node 600 may be implemented by one or more Application Specific Integrated Circuits (ASICs), Digital Signal Processors (DSPs), Programmable Logic Devices (PLDs), Complex Programmable Logic Devices (CPLDs), Field Programmable Gate Arrays (FPGAs), general-purpose processors, controllers, Microcontroller Units (MCUs), microprocessors, or other electronic components to execute the aforementioned methods.

It can be understood that the memory 603 in the embodiments of the present application may be a volatile memory or a non-volatile memory, or may include both volatile and non-volatile memory. The non-volatile memory may be a Read-Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a flash memory, a magnetic surface memory, an optical disc, or a Compact Disc Read-Only Memory (CD-ROM); the magnetic surface memory may be disk storage or tape storage. The volatile memory may be a Random Access Memory (RAM), which is used as an external high-speed cache. By way of example but not limitation, many forms of the RAM are available, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), Synchronous Link Dynamic Random Access Memory (SLDRAM), Direct Rambus Random Access Memory (DRRAM). The memory described in the embodiments of the present application is intended to include, but is not limited to, these and any other suitable types of memory.

In an exemplary embodiment, the present application further provides a storage medium, namely a computer storage medium, specifically a computer-readable storage medium, for example, a memory 603 storing a computer program. The computer program can be executed by a processor 602 of a node 600 to complete the steps of the aforementioned method. The computer-readable storage medium may be a memory such as FRAM, ROM, PROM, EPROM, EEPROM, Flash Memory, magnetic surface storage, optical disk, or CD-ROM.

It should be noted that the terms "first", "second" and the like are used to distinguish similar objects, and are not necessarily used to describe a specific order or sequence.

In addition, the technical solutions described in the embodiments of the present application may be combined arbitrarily without conflict.

The above are only preferred embodiments of the present application and are not intended to limit the protection scope of the present application.

## Claims

1. A blockchain generation method, comprising:
   generating a second blockchain based on a first blockchain and a first function, wherein the second blockchain is used to detect whether data on the first blockchain has been tampered with; blocks in the first blockchain are in a one-to-one correspondence with blocks in the second blockchain, and a block body of each block in the second blockchain other than a genesis block is generated by using the first function, and the first function is formed by using at least two different types of hash functions in a nesting manner.

2. The method according to claim 1, wherein a hash computation of the first function starts from an innermost hash function, and a computation result of each layer serves as an input to a hash function of an upper layer of the each layer, until the computation reaches an outermost hash function.

3. The method according to claim 1, wherein a block body of the genesis block in the second blockchain comprises first information, and the first information indicates the first function.

4. The method according to claim 1, wherein when generating the second blockchain, the method further comprises:
   for each block in the second blockchain other than the genesis block, generating a block body of the block by inputting a block header of the block, a preceding block of the block, and a corresponding block in the first blockchain into the first function.

5. The method according to claim 1, wherein a block header of each block in the second blockchain comprises second information, and the second information indicates a corresponding block in the first blockchain.

6. The method according to claim 5, wherein the second information comprises a timestamp or a block number comprised in a block header of a corresponding block in the first blockchain.

7. The method according to any one of claims 1 to 6, wherein the method further comprises:
   detecting, by using the second blockchain, whether data of a to-be-detected-block in the first blockchain has been tampered with.

8. The method according to claim 7, wherein the detecting, by using the second blockchain, whether the data of the to-be-detected-block in the first blockchain has been tampered with comprises:

finding a corresponding to-be-detected-block in the first blockchain according to data to be verified; in the case that the to-be-detected-block is verified in the first blockchain, detecting, by using the second blockchain, whether the data of the to-be-detected-block has been tampered with.

9. The method according to claim 8, wherein the detecting, by using the second blockchain, whether the data of the to-be-detected-block has been tampered with comprises:

finding the corresponding block and a preceding block of the corresponding block in the second blockchain by using a timestamp or a block number comprised in a block header of the to-be-detected-block;
detecting whether the data of the to-be-detected-block has been tampered with based on the corresponding block and the preceding block of the corresponding block that are found.

10. The method according to claim 9, wherein detecting whether the data of the to-be-detected-block has been tampered with based on the corresponding block and the preceding block of the corresponding block that are found comprises:

inputting the block header of the corresponding block of the to-be-detected-block in the second blockchain, the preceding block of the corresponding block, and the to-be-detected-block into the first function, to perform computation to obtain a computation result;
in the case that the block body of the corresponding block of the to-be-detected-block in the second blockchain is same as the computation result, determining that the data of the to-be-detected-block has not been tampered with.

11. The method according to claim 9, wherein the detecting whether the data of the to-be-detected-block has been tampered with based on the corresponding block and the preceding block of the corresponding block that are found comprises:

inputting the block header of the corresponding block of the to-be-detected-block in the second blockchain, the preceding block of the corresponding block, and the to-be-detected-block into the first function, to perform computation to obtain a computation result;
in the case that the block body of the corresponding block of the to-be-detected-block in the second blockchain is different from the computation result, determining that the data of the to-be-detected-block has been tampered with.

12. A blockchain generation apparatus, comprising:
a first processing unit, configured to generate a second blockchain based on a first blockchain and a first function, wherein the second blockchain is used to detect whether data on the first blockchain has been tampered with; the blocks in the first blockchain are in a one-to-one correspondence with blocks in the second blockchain, a block body of each block in the second blockchain other than a genesis block is generated by using the first function, and the first function is formed by using at least two different types of hash functions in a nesting manner.

13. A node, comprising: a communication interface and a processor; wherein
the processor is configured to generate a second blockchain based on a first blockchain and a first function, wherein the second blockchain is used to detect whether data on the first blockchain has been tampered with; blocks in the first blockchain are in a one-to-one correspondence with blocks in the second blockchain, and a block body of each block in the second blockchain other than a genesis block is generated by using the first function, and the first function is formed by using at least two different types of hash functions in a nesting manner.

14. A node comprising: a processor and a memory configured to store a computer program executable on the processor, wherein the processor is configured to execute the computer program to implement the steps of the method according to any one of claims 1 to 11.

15. A storage medium storing a computer program, wherein the computer program is used to be executed by a processor to implement the steps of the method according to any one of claims 1 to 11.

| block i-1 | block i | block i+1 |
|---|---|---|
| **block header** | **block header** | **block header** |
| hash value of a preceding block header | hash value of a preceding block header | hash value of a preceding block header |
| nonce | nonce | nonce |
| timestamp | timestamp | timestamp |
| target difficulty coefficient | target difficulty coefficient | target difficulty coefficient |
| version information | version information | version information |
| Merkle root | Merkle root | Merkle root |
| Tx1,Tx2,...Txn | Tx1,Tx2,...Txn | Tx1,Tx2,...Txn |
| block body | block body | block body |

**FIG. 1**

client — form transaction — use consensus mechanism — form block — update ledger

**FIG. 2**

generating a second blockchain based on a first blockchain and a first function — 301

detecting, by using the second blockchain, whether data of a to-be-detected-block in the first blockchain has been tampered with — 302

**FIG. 3**

FIG. 4

FIG. 5

FIG. 6

## INTERNATIONAL SEARCH REPORT

| International application No. |
| --- |
| **PCT/CN2024/073450** |

### A. CLASSIFICATION OF SUBJECT MATTER

H04L9/40(2022.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS: CNTXT; VEN; USTXT; WOTXT; EPTXT; CNKI; IEEE: 区块链, 区块, 生成, 构建, 创建, 检测, 检查, 检验, 验证, 核查, 篡改, 修改, 更改, 嵌套, 内嵌, 函数, 算法, 哈希, 创始区块, 区块头, 验证区块链, 验证区块, 验证块, blockchain, block, generate, create, detect, check, verify, tamper, modify, embed, function, algorithm, hash, genesis block, verification block chain, verification block, VBC, VB

### C. DOCUMENTS CONSIDERED TO BE RELEVANT

| Category* | Citation of document, with indication, where appropriate, of the relevant passages | Relevant to claim No. |
| --- | --- | --- |
| A | CN 107657438 A (UNION MOBILE PAY CO., LTD.) 02 February 2018 (2018-02-02) description, paragraphs [0111]-[0225] | 1-15 |
| A | CN 109075964 A (AHN KYU TAE et al.) 21 December 2018 (2018-12-21) entire document | 1-15 |
| A | CN 109784086 A (SICHUAN BUSINESS EASY CO., LTD.) 21 May 2019 (2019-05-21) entire document | 1-15 |
| A | CN 110826087 A (TENCENT TECHNOLOGY (SHENZHEN) CO., LTD.) 21 February 2020 (2020-02-21) entire document | 1-15 |
| A | CN 111327427 A (TENCENT TECHNOLOGY (SHENZHEN) CO., LTD.) 23 June 2020 (2020-06-23) entire document | 1-15 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 April 2024** | **24 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/073450**

| C. | DOCUMENTS CONSIDERED TO BE RELEVANT | |
|---|---|---|
| Category* | Citation of document, with indication, where appropriate, of the relevant passages | Relevant to claim No. |
| A | CN 112667746 A (ZHEJIANG ORACLE SUPER CODE TECHNOLOGY CO., LTD.) 16 April 2021 (2021-04-16)<br>entire document | 1-15 |

Form PCT/ISA/210 (second sheet) (July 2022)

**INTERNATIONAL SEARCH REPORT**
Information on patent family members

International application No.

**PCT/CN2024/073450**

| Patent document cited in search report | | | Publication date (day/month/year) | Patent family member(s) | | | Publication date (day/month/year) |
|---|---|---|---|---|---|---|---|
| CN | 107657438 | A | 02 February 2018 | None | | | |
| CN | 109075964 | A | 21 December 2018 | KR | 20170040079 | A | 12 April 2017 |
| | | | | KR | 102050129 | B1 | 28 November 2019 |
| | | | | WO | 2017192007 | A2 | 09 November 2017 |
| | | | | WO | 2017192007 | A3 | 04 January 2018 |
| | | | | US | 2019207767 | A1 | 04 July 2019 |
| CN | 109784086 | A | 21 May 2019 | None | | | |
| CN | 110826087 | A | 21 February 2020 | None | | | |
| CN | 111327427 | A | 23 June 2020 | None | | | |
| CN | 112667746 | A | 16 April 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310118067